# FASCICULE DE BREVET EUROPEEN

(11) **EP 0 502 756 B1**
(45) Date de publication et mention de la délivrance du brevet: **18.09.1996**
(21) Numéro de dépôt: 92400475.7
(22) Date de dépôt: 25.02.1992
(51) Int. Cl.: C03B 23/023, C03B 27/00, C03B 23/03, C03B 23/025, C03B 27/004, C03B 27/04, C03B 40/00, D03D 15/00, D03D 15/12

(54) **Revêtement pour formes de bombage**
Bekleidung für Biegeformen
Liner for bending moulds

(30) Priorité: 01.03.1991 FR 9102514
(43) Date de publication de la demande: 09.09.1992
(73) Titulaire: SAINT-GOBAIN VITRAGE, F-92400 Courbevoie (FR)
(72) Inventeur: Lesage, Jean-Luc, F-60200 Compiègne (FR); Gy, René, F-93250 Villemomble (FR)
(74) Mandataire: Muller, René

(56) Documents cités:
- EP-A- 0 312 441
- EP-A- 0 319 298
- EP-A- 0 388 249
- DE-C- 3 908 642
- GB-A- 2 168 339
- US-A- 4 052 185

## Description

L'invention a trait aux techniques de bombage de feuilles de verre et concerne plus spécialement un revêtement pour une forme de bombage pleine contre laquelle la feuille de verre est appliquée au cours du processus de bombage.

Dans les techniques de bombage les plus fréquemment utilisées, la feuille de verre - chauffée au delà de sa température de déformation - est appliquée au moins une fois au cours du processus de bombage contre une forme de bombage constituée par une plaque - réalisée dans une tôle ou une céramique réfractaire - qui présente éventuellement une forme plus ou moins proche de la forme définitive que l'on souhaite conférer à la feuille de verre. Cette forme de bombage est le plus souvent utilisée en association avec un cadre à profil courbe ouvert en son centre, aussi par opposition à celui-ci est elle couramment désignée sous le terme de "forme de bombage pleine", que celle-ci présente une surface extérieure plane ou galbée.

L'application de la feuille contre la forme pleine, lorsqu'elle est galbée, peut faire intervenir en outre un véritable pressage mécanique de la feuille de verre entre la forme pleine et un moule annulaire également galbé, ce pressage permettant l'obtention de vitrages de forme complexe et/ou particulièrement bombés localement.

Qu'il y ait ou non une opération de pressage lors du bombage, la surface de contact de la forme pleine avec les feuilles de verre est obtenue par un revêtement intercalaire disposé sur celle-ci, et qui se doit de posséder des caractéristiques bien définies.

Tout d'abord, quelle que soit la nature du revêtement envisagé, celui-ci doit être aisé à fixer sur la forme, de manière à rendre l'opération de changement d'intercalaire la plus courte et la plus simple possible. Pour ce faire, il doit donc pouvoir facilement épouser les contours de la forme, et, notamment lorsqu'il s'agit d'un tissu, présenter pour cela une capacité à bien se tendre sur la forme, en étant relativement souple, extensible.

Par ailleurs, une fois fixé sur la forme, ce revêtement est destiné par son moelleux à adoucir le contact entre le verre et la forme supérieure dont il gomme notamment les petites imperfections qui peuvent subsister malgré l'usinage.

De plus, même en supposant la forme de bombage parfaitement lisse, il faut encore tenir compte des poussières prises en sandwich entre le verre et la forme. Le revêtement doit en conséquence présenter une certaine porosité afin de pouvoir les absorber avant qu'elles ne risquent de marquer la surface du verre ramolli.

A fortiori, la texture même du revêtement ne doit pas être susceptible, de par sa nature, de laisser des empreintes sur le verre, pour ne pas affecter la qualité optique des vitrages produits. Il est donc souhaitable que le revêtement soit bien dense et offre une surface de contact avec les feuilles de verre qui soit bien lisse.

De plus, il se trouve que fréquemment des compositions d'émaillage couvrent la face supérieure de la feuille qui entre en contact avec la forme supérieure.

En effet, ces compositions d'émaillage sont appliquées sous forme de pâtes à l'entrée du four destiné à chauffer les feuilles de verre à la température de bombage et/ou de trempe, et naturellement sur la face supérieure de la feuille de verre, c'est-à-dire sur la face qui n'entre pas en contact avec le convoyeur, généralement à rouleaux, acheminant le verre au travers du four.

Suivant les compositions d'émaillage utilisées, les émaux - dont la cuisson peut ne pas être totalement achevée lorsque la feuille de verre pénètre dans la station de bombage où se situe la forme de bombage - présentent un pouvoir collant plus ou moins grand. Ce collage peut d'une part entraîner la dégradation du revêtement qui a tendance à s'arracher de la forme, à se déchirer, et d'autre part des retards aléatoires à la chute des feuilles de verre qui doivent être compensés par une baisse de cadence au prix éventuellement de défauts de courbure.

Il est également nécessaire que ledit revêtement présente une complète inertie chimique vis-à-vis des feuilles de verre, afin qu'aucune réaction chimique parasite ne vienne dégrader le revêtement et/ou les feuilles de verre.

Une autre exigence, qui se superpose aux précédentes et qui est cruciale, est que le revêtement doit conserver intactes toutes ses propriétés le plus longtemps possible à température élevée. En effet, fixé sur la forme, celui-ci doit être à même de supporter une température supérieure à 650°C sans se dégrader, tout au moins pendant une durée satisfaisante du point de vue industriel, sachant qu'un changement d'intercalaire implique une interruption de la production.

Un premier type de revêtement utilisé est du tissu en fibres de verre E, c'est-à-dire dans un verre réfractaire non alcalin. Mais la limite de température d'utilisation d'un tel matériau est très proche de la température d'une feuille de verre dans une chambre de bombage, aussi un tel tissu se dégrade rapidement par oxydation. De plus, on peut retrouver l'empreinte de la trame du tissu visible sur la feuille de verre bombée, feuille dont la qualité optique est alors fortement affectée.

Pour répondre à ce problème de dégradation par oxydation à haute température, on a préconisé l'utilisation de fibres de silice et/ou d'alumine agglomérées par un liant minéral pour former un papier. La texture non tissée du papier évite le marquage, et la très grande résistance à la chaleur des fibres utilisées protège le revêtement de toute oxydation à la température d'utilisation. Cependant il présente certains inconvénients.

Ainsi, on doit utiliser un papier d'épaisseur de l'ordre de 1 à 2 mm si on veut pouvoir le tendre correctement sans qu'il se déchire sur la forme, avec, comme corollaire, une raideur du papier qui convient mal aux formes de bombage les plus complexes, ce qui créé un problème de mise en place de l'intercalaire.

De plus, le papier est généralement collé contre la forme de bombage. Si l'application de la colle n'est pas effectuée avec le soin requis, il se forme de petits grumeaux qui créent des boursouflures dont l'empreinte est visible sur le verre. D'autre part, la porosité du papier permet à la colle de migrer par endroits jusqu'en surface du papier et à nouveau on observe un marquage du verre.

En outre, lorsque les feuilles de verre sont pourvues de compositions d'émaillages relativement collantes, des lambeaux de papier entraînés par les feuilles ont tendance à se détacher, nécessitant un remplacement rapide du revêtement.

Il est connu également d'utiliser un revêtement à base de fils métalliques réfractaires assemblés, par exemple tricotés comme cela est évoqué dans la demande de brevet FR-A-2 606 398, sous forme de feutre de tissu ou de tricot comme le propose le brevet FR-A-2 644 156.

Si ce type de revêtement présente entre autres une mise en place aisée sur la forme par la souplesse de sa texture, par simple tension au moyen de pinces par exemple, ses performances tendent à se dégrader à haute température avec le temps. Ainsi il peut finir par avoir un aspect un peu rêche, les fibres ont tendance à s'amincir et à devenir cassantes, et cette usure progressive, bien que moins rapide que celle du tissu de fibres de verre, finit par marquer le verre. Elle est due à une oxydation, qui arrive même lorsqu'on utilise des fils en acier dit "inoxydable" dans des conditions habituelles de température.

Le problème technique auquel s'efforce de répondre l'invention est donc d'obvier ces inconvénients par la fourniture d'un nouveau revêtement pour forme de bombage pleine et plus généralement pour tout outillage en contact avec des feuilles de verre chauffées à leur température de ramollissement, présentant les qualités requises précédemment évoquées et dont la durée de vie allongée permette d'en espacer davantage les remplacements.

Ce problème est résolu selon l'invention par un revêtement tel que défini dans la revendication 1 ou la revendication 2, ledit revêtement étant destiné aux outillages portés à la température des feuilles de verre chauffées au-delà de leur température de ramollissement avec lesquelles ils sont en contact, et notamment des outils de bombage/trempe tels qu'une forme pleine ou annulaire.

Les fils métalliques sont de préférence à base d'acier inoxydable dans les conditions normales de température, d'alliages nickel-chrome ou fer-chrome-nickel.

Ce qui est à la fois particulièrement avantageux et surprenant de l'invention, c'est qu'en associant ainsi dans un unique revêtement deux natures différentes de fils, on combine leurs propriétés complémentaires : les fils métalliques permettent d'assurer la tenue mécanique et apportent la texture adéquate, tandis que les fils en céramique garantissent la tenue en température. Il s'agit donc d'une véritable synergie, qui a comme résultat un revêtement dont l'usure est très ralentie.

L'explication la plus simple de ce phénomène serait qu'une quantité moindre de fils métalliques dans le revêtement, puisqu'une partie d'entre eux est ainsi remplacée par des fils en silice, entraîne un risque affaibli d'oxydation desdits fils métalliques. Diminuer, freiner l'oxydation de l'usure du revêtement, c'est en augmenter notablement la durée de vie.

Il se pourrait également qu'un contact très étroit entre du métal et la silice, un matériau céramique, influe sur le phénomène de propagation de la corrosion du métal due à la diffusion de l'oxygène ambiant à haute température.

Ce revêtement est constitué d'un tricot, car cette texture autorise un montage sur une forme pleine par simple étirage sur celle-ci puis accrochage derrière celle-ci par des pinces.

On évite ainsi d'avoir à fixer le revêtement par collage, opération toujours assez délicate comme on l'a vu précédemment.

Le tricot est en général la texture qui présente le plus d'extensibilité.

Tout se fait à partir de fibres élémentaires métalliques et en silice, qu'il est nécessaire d'associer entre elles pour obtenir des mèches ou des fils métalliques d'une part et en silice d'autre part, qui soient manipulables, car les fibres élémentaires sont d'une extrême finesse, lesdites fibres ayant des diamètres compris entre 7 et 16 microns. On constate que très avantageusement, que les fils soient de nature métallique ou en silice, ils sont fabriqués actuellement dans des gammes de diamètre similaires, ce qui favorise grandement leur possibilité d'association.

De manière connue dans l'industrie textile, les fils métalliques ne sont stables et aptes à être tricotés que s'ils sont "retordus". Là, deux options sont possibles : on peut le "retordre", c'est-à-dire torsader le fil métallique sur lui-même ou avec au moins un fil de même nature. On obtient alors des mèches 100 % métalliques. On peut aussi les retordre avec des fils en silice, et l'on obtient alors des mèches que l'on pourrait qualifier "d'hybrides" puisqu'en partie métallique et en partie en silice.

Quant à l'intégrité du fil en silice, elle est garantie usuellement par son ensimage. On peut les torsader entre eux pour obtenir alors les mèches 100 % en silice d'un diamètre similaire à celui des mèches 100 % métalliques.

On peut avantageusement utiliser toutes les techniques connues dans l'industrie textile pour associer entre elles des mèches 100 % métallique et 100 % en céramique, ou des mèches "hybrides" afin de réaliser le revêtement. On peut notamment faire un tricot qui soit parfaitement homogène quant à la répartition métal/céramique sur toute l'épaisseur du revêtement. Mais on peut aussi avantageusement fabriquer un revêtement qui présente deux faces non identiques, chaque face ayant sa propre répartition métal/silice. En effet, on peut ainsi distinguer la face destinée à être en contact avec le métal de la forme pleine et la face destinée à être en contact avec la feuille de verre ramollie.

La proportion globale massique du métal par rapport à la silice est très variable, elle est comprise entre 90/10 et 10/90, et de préférence entre 60/40 et 40/60.

Les caractéristiques et avantages de l'invention apparaîtront dans la description détaillée suivante d'exemples de réalisation non limitatifs :

On précise que l'on utilise en général deux unités pour caractériser un brin apte à être tricoté, qu'il soit métallique ou en silice : ce sont le numéro métrique et le Tex. Le numéro métrique indique le nombre de mètres linéaires de brin obtenu pour 1 gramme de matière, tandis que le tex indique le nombre de grammes d'un kilomètre dudit brin.

Selon l'invention, les brins aptes à être tissés ou tricotés ont une valeur de Tex compris entre 20 et 200, soit un numéro métrique compris entre 50 et 5.

### EXEMPLE 1

Le revêtement est constitué par un tricot de maillage type Jersey, à partir de mèches hybrides constitués de fils en inox 316 L et de fils en silice à partir de fibres de diamètres respectifs 12 et 14 microns. La proportion massique globale entre le métal et la silice dans ce revêtement est de 50/50. L'épaisseur du tricot final est de 0,7 mm et la distance entre deux rangées de tricot d'environ 1,4 mm.

### EXEMPLE 2

Le revêtement est constitué par un tricot de maillage type Jersey à partir des mèches constituées de fils en alliage au nickel en Inconel 601 et de mèches à partir de fils de silice, chacune des fibres de départ ayant un diamètre de 10 microns.

Le tricotage se fait sur un métier cylindrique avec les mèches en Inconel 601, des mèches en silice étant insérées progressivement dans le tricot métallique. La proportion finale massique entre le métal et la silice est de 60/40.

Dans les deux cas, on observe une augmentation de la durée de vie très notable des revêtements par rapport à un revêtement uniquement à base de fibres métalliques, se traduisant par une usure très ralentie due à une meilleure résistance à haute température. Ils sont utilisés, avec succès, aussi bien pour des formes pleines supérieures que pour des moules annulaires de pressage notamment.

En conclusion, le type de revêtement de formes de bombage/trempe mis au point dans le cadre de l'invention permet d'assurer une excellente qualité optique aux vitrages bombés au moyen de ces formes, vitrages que l'on utilise alors avantageusement dans les automobiles (par exemple en tant que pare-brise ou vitres latérales), et ceci sans qu'il soit nécessaire de le changer fréquemment, de par sa résistance accrue.

## Revendications

1. Revêtement en fils réfractaires de formes de bombage/trempe portées à la température des feuilles de verre chauffées au-delà de leur température de ramollissement, ce revêtement étant sous forme de tricot, caractérisé en ce que le tricot est constitué à partir de mèches associant des fils métalliques et de mèches associant des fils en silice.

2. Revêtement en fils réfractaires de formes de bombage/trempe portées à la température de feuilles de verre chauffées au-delà de leur température de ramollissement, ce revêtement étant sous forme de tricot, caractérisé en ce que le tricot est constitué à partir de mèches 〈〈 hybrides 〉〉 associant chacune au moins un fil métallique et au moins un fil en silice.

3. Revêtement selon la revendication 1 ou la revendication 2, **caractérisé en ce que** les fils métalliques sont à base d'acier inoxydable dans des conditions normales de température, d'alliages nickel-chrome ou fer-chromenickel.

4. Revêtement selon l'une des revendications précédentes, **caractérisé en ce que** les fils de métal et de silice sont constitués de fibres élémentaires de diamètre compris entre 7 et 16 microns.

5. Revêtement selon l'une des revendications précédentes, **caractérisé en ce que** la proportion globale massique du métal par rapport à la silice dans le tricot est comprise entre 90/10 et 10/90, de préférence entre 60/40 et 40/60.

6. Revêtement selon l'une des revendications précédentes, **caractérisé en ce que** les mèches du tricot ont une valeur de Tex compris entre 20 et 200.

7. Utilisation du revêtement selon une des revendications 1 à 6, pour recouvrir une forme pleine de bombage de Feuilles de verre.

8. Utilisation du revêtement selon une des revendications 1 à 6, pour recouvrir une forme annulaire de bombage de Feuilles de verre.

## Claims

1. Facing of refractory threads for bending/toughening moulds raised to the temperature of the glass sheets heated above their softening temperature, this facing being in the form of a knitted fabric, characterized in that the knitted fabric is constituted of rovings associating metallic threads and rovings associating silica threads.

2. Facing of refractory threads for bending/toughening moulds raised to the temperature of the glass sheets heated above their softening temperature, this facing being in the form of a knitted fabric, characterized in that the knitted fabric is made up from "hybrid" rovings, each associating at least one metallic thread and at least one silica thread.

3. Facing according to claim 1 or claim 2, characterized in that the metallic threads are based upon a steel that is stainless in normal temperature conditions, nickel-chrome alloy or iron-chrome-nickel alloy.

4. Facing according to one of the preceding claims, characterized in that the threads of metal and silica are constituted of elementary fibres having a diameter of from 7 to 16 microns.

5. Facing according to one of the preceding claims, characterized in that the overall proportion by mass of metal relative to silica in the knitted fabric lies between 90/10 and 10/90, preferably between 60/40 and 40/60.

6. Facing according to one of the preceding claims, characterized in that the rovings of the knitted fabric have a Tex value lying between 20 and 200.

7. Use of the facing according to one of claims 1 to 6 for covering a solid bending mould for glass sheets.

8. use of the facing according to one of claims 1 to 6 for covering an annular bending mould for glass sheets.

## Patentansprüche

1. Überzug aus hitzebeständigen Fasern für Biege-/Vorspannformen, die auf die Temperatur der auf über ihre Erweichungstemperatur erhitzten Glasscheiben gebracht worden sind, wobei dieser Überzug in Form eines Gestricks vorliegt**, dadurch gekennzeichnet, daß** das Gestrick aus Metalldrähte vereinigenden Strängen und aus Siliciumdioxidfasern vereinigenden Strängen gebildet ist.

2. Überzug aus hitzebeständigen Fasern für Biege-/Vorspannformen, die auf die Temperatur der auf über ihre Erweichungstemperatur erhitzten Glasscheiben gebracht worden sind, wobei dieser Überzug in Form eines Gestricks vorliegt**, dadurch gekennzeichnet, daß** das Gestrick aus "Hybridsträngen" gebildet ist, die jeweils mindestens einen Metalldraht und mindestens eine Siliciumdioxidfaser vereinigen.

3. Überzug nach Anspruch 1 oder 2**, dadurch gekennzeichnet, daß** die Metalldrähte unter normalen Temperaturbedingungen nichtrostenden Stahl und Chromnickel- oder Eisenchromnickellegierungen zur Grundlage haben.

4. Überzug nach einem der vorhergehenden Ansprüche**, dadurch gekennzeichnet, daß** die Metalldrähte und die Siliciumdioxidfasern aus Elementarfasern mit einem Durchmesser von 7 bis 16 Mikrometern bestehen.

5. Überzug nach einem der vorhergehenden Ansprüche**, dadurch gekennzeichnet, daß** der Gesamtmasseanteil des Metalls, bezogen auf das Siliciumdioxid im Gestrick, 90/10 bis 10/90 und vorzugsweise 60/40 bis 40/60 beträgt.

6. Überzug nach einem der vorhergehenden Ansprüche**, dadurch gekennzeichnet, daß** die Stränge des Gestricks eine Feinheit von 20 bis 200 tex besitzen.

7. Verwendung des Überzugs nach einem der Ansprüche 1 bis 6 zum Beschichten einer vollen Biegeform für Glasscheiben.

8. Verwendung des Überzugs nach einem der Ansprüche 1 bis 6 zum Beschichten einer ringförmigen Biegeform für Glasscheiben.
